# EUROPEAN PATENT APPLICATION

(11) **EP 1 162 018 A1**
(43) Date of publication of application: **12.12.2001**
(21) Application number: 00981977.2
(22) Date of filing: 09.12.2000
(51) Int. Cl.: B23D 5/02

(54) **METHOD FOR PLANING OBJECTS**

(30) Priority: 15.12.1999 RU 99126454
(71) Applicant: Otkrytoe Aktsionernoe Obschestvo " Experimentalny Nauchno-Issledovatelsky Institut Metallorezhuschikh Stankov", Moscow, 117926 (RU)
(72) Inventor: ESTERZON, Mikhail Abramovich, Moscow, 121552 (RU); ALEXEEV, Leonid Vasilievich, Moscow, 109017 (RU); ASHKINAZY, Yakov Mikhailovich, Moscow, 103001 (RU); GRIGORIEV, Sergei Vsevolodovich, Moscow, 125445 (RU); IPATOVA, Tatiyana Petrovna, Moscow, 125057 (RU); KLIMOV, Alexei Ivanovich, Moscow, 113093 (RU); MOCHALOV, Igor Alexandrovich, Moscow, 113162 (RU); PISAREV, Alexandr Georgievich, Moscow, 115551 (RU); RAKHOVSKY, Vadim Izrailovich, Moscow, 123242 (RU); CHEGLAKOV, Andrei Valerievich, Moscow, 123022 (RU); CHEKMAREV, Viktor Afanasievich, Moscow, 113093 (RU); CHERPAKOV, Boris Iliich, Moskovskaya obl., 141014 (RU); YAKUNIN, Valery Alexandrovich, Moscow, 113143 (RU)
(74) Representative: Patentanwälte Zellentin & Partner
(86) International application number: RU0000501
(87) International publication number: WO0143907

(57) **Abstract**

The invention can be applied to the planing of basically metallography moulds. Prior to starting the workpiece planing, longitudinal axis 1 of planing tool (P) 2 is oriented at an angle close or equal to 90° to the plane of location of coordinate axes X and Y. Nose 3 of P2 is set in the initial point of cutting path (T) 4, and face 5 of P2 is oriented along the normal to cutting T4 in this point. In the process of planing, synchronous relative motion of the workpiece and P2 is exercised over two axes X and Y through the preset program. The above-mentioned motion is effected so that to make it possible to provide resulting motion of P2 over preset T4. When, for example, the radius of curvature on a section of this T4 gets changed, then the spatial location of face 5 of P2 is to be changed in relation to its previous position. This should be done so that in passing any point of the section of T4 with a varying radius of curvature, face 5 remains to be perpendicular to plane 6 which intersects the plane of location of coordinate axes X and Y, and is oriented in parallel with the projection of vector V of the instantaneous velocity of P2 in this point on the plane of location of above-mentioned coordinate axes X and Y.

## Description

### Engineering field

The invention is relevant to the mechanical engineering field and may be basically applied to machining workpieces with a complicated profile of the work surface (for example, metallography investment moulds) with the use of planing machines.

### Earlier engineering level

It is known the workpiece planing technique consisting in initial spatial orientation of a tool prior to the planing. This process involves preset orientation of the tool longitudinal axis and positioning of its face along the normal to a transient surface. Synchronous relative motion of the workpiece and tool is effected over two orthogonal coordinate axes in the process of planing (through a preset program). The tool longitudinal axis is oriented in parallel with the plane of location of the above-mentioned coordinate axes, while the above-mentioned relative motion is exercised over the straight path (SU, A1, No. 1618524).

Referred to limitations of the known technique of the workpiece planing should be the fact that it is practically unsuitable for shaping profile elements (for example, grooves) with an intricate geometric form (in plan) on the workpiece surface through the path containing curved sections, for example, sections with a varying radius of curvature.

This derives from the fact that the known technique fails to provide any means and/or methods for changing the relative spatial location of the tool face (in relation to its initial location) in the process of planing sections of the curved path. The face location should be changed so that in passing any point of a curved path section, it remains perpendicular to the plane which intersects the plane of location of the above-mentioned coordinate axes and is oriented in parallel with the projection of the tool instantaneous relative velocity vector in this point on the plane of location of the above-mentioned coordinate axes.

Because the known planing technique lacks the above-described process, there are the following negative consequences in effect.

First, the tool resistance degrades because of unfavorable cutting conditions when the tool runs through corresponding section of the cutting path (for example, through sections with a varying radius of curvature). This takes place owing to the fact that the spatial orientation of the tool flanks gets changed with reference to the transient surface.

Second, the planing accuracy gets impaired because the shaped profile geometry changes (in case of cutting, for example, curved profile grooves on the workpiece surface). This takes place because the tool face spatial orientation gets changed (relative to its initial orientation) with reference to the direction of the tool relative displacement.

In this case, it should be taken into consideration that the planing accuracy is the most vital criterion of quality, for example, for metallography investment moulds used for production of banknotes and other valuable stock because this planing parameter assures additional degrees of protection against their forgery.

### Disclosure of invention

The basis for the workpiece planing technique applied has been the task of creating such a planing (cutting) process, which would increase the planing accuracy and quality simultaneously with extension of the field of application and process capacities.

The objective assigned is attained due to the fact that this workpiece planing technique involves the tool initial spatial orientation at the beginning of the planing. This process includes the preset orientation of the tool longitudinal axis and positioning of its face along the normal to a transient surface. In the process of planing, the synchronous relative motion of the workpiece and tool is effected over two coordinate axes (mainly orthogonal ones) through a preset program. In compliance with the invention, the tool longitudinal axis is oriented at an angle close or equal to 90° to the plane of location of the above-mentioned coordinate axes. The relative motion of the workpiece and tool is effected through the path containing curved sections. When the direction of the projection of the tool relative motion velocity vector on the plane of location of the above-mentioned coordinate axes gets changed, then the tool face spatial location is to be changed in relation to its previous location. This should be done so that in passing any point of the above-mentioned motion path, this face remains perpendicular to the plane which intersects the plane of location of the coordinate axes and is oriented in parallel with the projection of the tool relative motion instantaneous velocity vector in this point on the plane of location of the above-mentioned coordinate axes.

It is permissible to effect such change of the tool face spatial location by means of rotation of the workpiece and/or tool about appropriate axes oriented along the normal to the plane of location of coordinate axes.

To exercise planing, it is the best practice to use a planing tool with a triangular profile of its cutting portion. The face of this tool is to be oriented in parallel with its longitudinal axis. In this case, the above-mentioned change of the planing tool face spatial location should be effected through rotation of the planing tool about the axis running through the tool nose and oriented along the normal to the plane of location of the above-mentioned coordinate axes.

### Brief description of drawings

Fig. 1 shows the path of relative motion of the workpiece and tool (cutting path) in orthogonal axes X and Y, as well as the tool face spatial location in various points of this path.
Fig. 2 shows one of possible designs of the tool (planing tool) to be used for industrial implementation of the technique to be patented.
Fig. 3 represents the view along arrow A on Fig. 2.
Fig. 4 shows the cross-section over line I - I on Fig. 3.

### Best version of invention implementation

The engineering essence of the workpiece planing technique applied consists in the following.

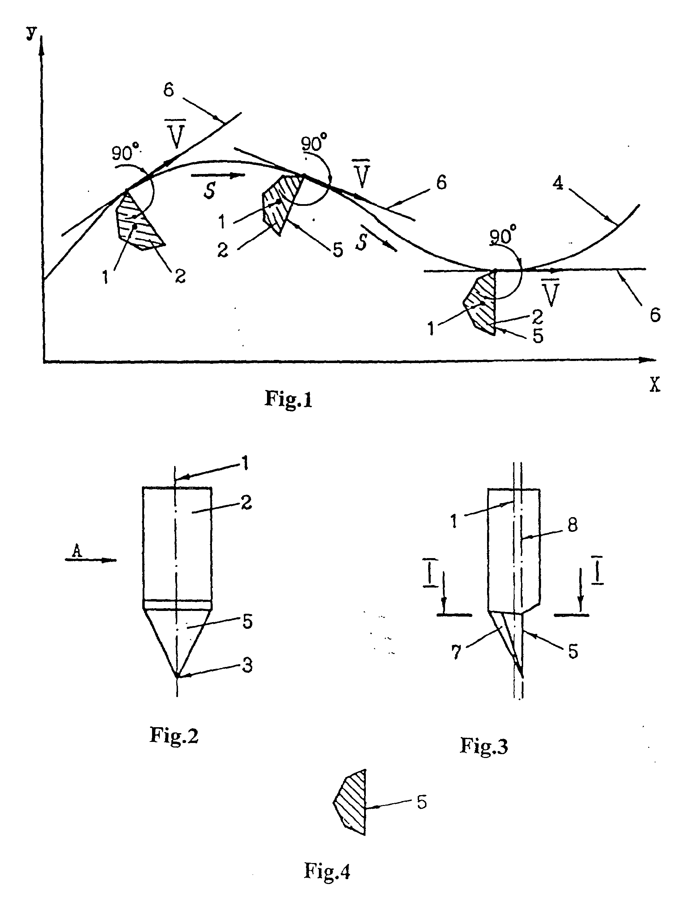

Prior to starting the workpiece planing, longitudinal axis 1 of planing tool 2 is oriented at an angle close or equal to 90° to the plane of location of coordinate axes X and Y, along which the relative motion (the direction of which is conventionally shown on Fig. 1 by arrows S) of planing tool 2 and the workpiece is provided. Nose 3 of planing tool 2 is set in the zone of the origin of cutting path 4 (i.e. the path of the relative motion of the tool and workpiece). Face 5 of planing tool 2 is oriented along the normal to cutting path 4 in the initial point. In the process of planing, synchronous relative motion of the workpiece and tool is provided over two coordinate axes X and Y (mainly orthogonal ones, see Fig. 1) through the preset program assuring required curved cutting path 4. The above-mentioned relative motion is effected so that to make it possible to provide resulting motion of planing tool 2 over preset path 4 with curved sections (for example, with sections having a constant or varying radius of curvature). When the direction of the projection of tool relative motion instantaneous velocity vector V on the plane of location of coordinate axes X and Y gets changed (for example, in the process of variation of the radius of curvature on a particular section of path 4), then the spatial location of face 5 of planing tool 2 is to be changed in relation to the initial (or previous) position of this face 5. This should be done so that in passing any point of above-mentioned cutting path 4 (for example on the section with a varying radius of curvature), face 5 remains perpendicular to plane 6 which intersects the plane of location of coordinate axes X and Y, and is oriented in parallel with the projection of tool relative motion instantaneous velocity vector V in this point on the plane of location of above-mentioned coordinate axes X and Y (plane 6 is conventionally shown on Fig. 1 as a straight line being the line of intersection of plane 6 with the plane of location of coordinate axes X and Y).

Proving such spatial orientation of face 5 of planing tool 2 in any point of cutting path 4 creates optimal invariable cutting conditions through the entire manufacturing pass (because of stability of the spatial orientation of flanks of planing tool 2 in relation to the transient surface). Such conditions enhance resistance of the tool (planing tool 2) and accuracy of the workpiece planing as a whole.

There should be pointed out here that if the planing process is exercised with a cutting constant depth over entire path 4 of the relative motion of planing tool 2, the above-mentioned projection of tool instantaneous velocity vector V in each particularly taken point of the motion path is strictly parallel with instantaneous velocity vector V in this point. When the planing process is effected with a cutting varying depth (that is also possible within the framework of the planing technique under application), the condition specified is not observed. Because of this fact the spatial orientation of conventional plane 6 is effected by fixing it just to the projection (on the plane of location of coordinate axes X and Y) of above-mentioned instantaneous velocity vector V of planing tool 2 in each particularly taken point of cutting path 4.

It is quite clear that the specified change of the spatial location of face 5 of planing tool 2 can be effected by widely known engineering facilities. For example, this can be achieved by rotating the workpiece and/or planing tool 2 about appropriate axes oriented through the normal to the plane of location of coordinate axes X and Y.

From the design-process point of view, to plane a workpiece in compliance with the technique under application, it is advantageous to use planing tool 2 with the triangular profile of cutting portion 7 with its face 5 being oriented in parallel with longitudinal axis 1 of planing tool 2. In doing so, it is the best practice to effect the above-mentioned change of the spatial location of face 5 of planing tool 2 by rotating planing tool 2 about axis 8 running through its nose 3 and oriented along the normal to the plane of location of coordinate axes X and Y specified.

### Industrial applicability

The workpiece planing technique applied may be basically used for machining workpieces with a complicated profile of the work surface (for example, metallography investment moulds whose operating surface relief is formed by ordered set of profile grooves of various sizes and geometric forms) with the use of numerically controlled planing machines. This technique is also applicable to other workpieces characteristic of increased requirements to the planing accuracy, and in functional layers of which it is necessary to obtain a pattern of a preset depth with submicron resolution of its structures.

## Claims

1. The workpiece planing technique consisting in initial spatial orientation of the tool prior to the planing. This process involves preset orientation of the tool longitudinal axis (1) and positioning of its face (5) along the normal to the transient surface. Synchronous relative motion of the workpiece and tool is effected through a preset program over two coordinate axes (X, Y) in the process of planing. The technique is unique by the fact that the tool longitudinal axis (1) is oriented at an angle close or equal to 90° to the plane of location of the above-mentioned coordinate axes (X, Y). Such relative motion is effected over the path (4) containing curved sections. When the direction of the projection of the tool relative motion velocity vector (V) on the plane of location of the above-mentioned coordinate axes (X, Y) gets changed, then the tool face (5) spatial location is to be changed in relation to its previous location. This should be done so that in passing any point of the above-mentioned motion path (4), this face (5) remains perpendicular to the plane (6) which intersects the plane of location of the coordinate axes (X, Y) and is oriented in parallel with the projection of the tool relative motion instantaneous velocity vector (V) in this point on the plane of location of the above-mentioned coordinate axes (X, Y).

2. The technique through Item 1 but differing by the fact that the above-mentioned change of the spatial location of the tool face (5) is effected by rotating the workpiece and/or tool about appropriate axes oriented along the normal to the plane of location of coordinate axes (X, Y).

3. The technique through Item 1 but differing by the fact that the planing tool (2) with the cutting portion triangular profile is used for the planing purpose. The face of this tool (5) is to be oriented in parallel with the longitudinal axis 1) of the planing tool (2). In this case, the above-mentioned change of the planing tool face (5) spatial location should be effected through rotation of the planing tool (2) about the axis (8) running through the tool nose (3) and oriented along the normal to the plane of location of the above-mentioned coordinate axes (X, Y).
